# EUROPÄISCHE PATENTANMELDUNG

(11) **EP 0 909 725 A2**
(43) Veröffentlichungstag der Anmeldung: **21.04.1999**
(21) Anmeldenummer: 98115659.9
(22) Anmeldetag: 20.08.1998
(51) Int. Cl.: B65G 1/04, B65G 1/137

(54) **Kommissionierungsanlage für kleinteilige, verpackte Produkte**

(30) Priorität: 03.09.1997 DE 29715820 U
(71) Anmelder: Staude Pharma Komm GmbH, 46485 Wesel (DE)
(72) Erfinder: Staude, Norbert, 46485 Wesel (DE)
(74) Vertreter: Patentanwälte Gesthuysen, von Rohr, Weidener, Häckel

(57) **Zusammenfassung**

Gegenstand der Erfindung ist eine Kommissionierungsanlage für insbesondere Apothekenprodukte, mit einer Regalwand (3) mit übereinander angeordneten, jeweils in nebeneinander liegende Sortierfächer (4) aufgeteilten Regalböden (5), mit einer an der Vorderseite der Regalwand (3) angeordneten Produkt-Sammeleinrichtung (6) und mit einer an der Rückseite der Regalwand (3) angeordneten Produkt-Beschickungseinrichtung (7). Diese zeichnet sich durch eine besonders hohe Lagerdichte aus und ist dadurch gekennzeichnet, daß die Regalböden (5) eben angeordnet sind und daß die Beschickungseinrichtung (7) eine eben ausgerichtete Beschickungsplattform (8) mit einer Ausrichtschiene (9) o. dgl., einen an der Ausrichtschiene (9) o. dgl. entlang in Längsrichtung der Sortierfächer (4) bis etwa an das vorderseitige Ende der Sortierfächer (4) motorisch verstellbaren Schieber (10) und einen motorischen, insbesondere elektromotorischen Antrieb für den Schieber (10) aufweist. Insbesondere ist vorgesehen, daß der Schieber (10) von einer Energieführungskette (10) gebildet ist und daß die Energieführungskette (10) mit ihrer Bogeninnenseite auf der Beschickungsplattform (8) aufliegt.

## Beschreibung

Die Erfindung betrifft eine Kommissionierungsanlage für kleinteilige Produkte mit den Merkmalen des Oberbegriffs von Anspruch 1. Gegenstand der Erfindung ist auch eine Baugruppe für eine solche Kommissionierungsanlage, nämlich eine Beschickungseinrichtung für die Produkte gemäß dem Oberbegriff von Anspruch 11. Schließlich ist Gegenstand der Erfindung auch eine Bewegungseinrichtung zur Bewegung eines beweglichen Teils generell mit den Merkmalen des Oberbegriffs von Anspruch 13.

Kommissionierungsanlagen für kleinteilige, verpackte Produkte sind insbesondere auf dem Gebiet der Apothekenprodukte für große Apotheken, Krankenhausapotheken oder den Apotheken-Großhandel bekannt. Bei diesen Kommissionierungsanlagen geht es immer darum, eine möglichst große Anzahl von Produkten auf vorgegebenem Raum mit möglichst großer Flexibilität zu lagern und eine besonders schnelle und fehlerfreie Beschickung und Auslagerung - Kommissionierung - der Produkte zu gewährleisten. Das alles soll vollautomatisch, computergesteuert passieren können.

Kommissionierungsanlagen der in Rede stehenden Art sind für Apothekenprodukte in besonderem Maße bestimmt und geeignet, können aber auch für andere verpackte Produkte wie Kosmetika, Parfümeriewaren, Drogerieartikel, aber auch für allgemeine Kleinteileläger (Schrauben, Nägel, Bolzen, Filme, Kassetten, Videos etc.) verwenden finden. Im folgenden wird die Erläuterung der Erfindung immer anhand einer Kommissionierungsanlage für Apothekenprodukte erfolgen, ohne daß dies insoweit einschränkend zu verstehen ist.

Die bekannte Kommissionierungsanlage, von der die Erfindung ausgeht (DE - U - 295 15 627) weist eine Regalwand mit an der Vorderseite offenen oder öffenbaren, zur Vorderseite hin abfallend geneigten Regalböden mit entsprechenden Sortierfächern auf. Die Produkte in den Sortierfächern stehen am vorderen Ende an einem Anschlag. Eine an der Vorderseite der Regalwand angeordnete Produkt-Sammeleinrichtung weist eine Greifeinrichtung auf, mit der die Produkte automatisch aus dem bzw. den betroffenen Sortierfächern entnommen, in einer Auffangwanne gesammelt und zu einer Abgabeposition als gesammelte Kommission transportiert werden. Die Nachfüll-Beschickung erfolgt von der Rückseite der Regalwand aus durch eine Produkt-Beschickungseinrichtung, die eine Beschickungsplattform aufweist, die aus einer praktisch horizontalen Aufnahme- und Transportlage in eine zur Regalwand abfallend geneigte Befüllage und zurück kippbar ist. Die Produkte rutschen bei dieser Kommissionierungsanlage also unter Eigengewicht in die Sortierfächer der Regalwand hinein und kommen am Anschlag im jeweiligen Sortierfach zur Anlage.

Bei der zuvor erläuterten Kommissionierungsanlage wird in der Höhe der Regalwand systematisch Platz verschenkt, weil die Regalböden zur Vorderseite hin abfallend geneigt sind. Außerdem sind die Höhenabstände der Regalböden regelmäßig etwas großer als für die Produkte unbedingt erforderlich, weil die Produkte an der Vorderseite von der Greifeinrichtung erfaßt werden müssen. Schließlich hat sich gezeigt, daß die gesamte Konstruktion noch etwas zu kompliziert ist, also eine Vereinfachung im Aufbau erstrebenswert ist.

Bei Kommissionierungsanlagen mit waagerecht ausgerichteten Regalböden und Sortierfächern wird regelmäßig die Produkt-Sammeleinrichtung sowohl zur Kommissionierung als auch zur Beschickung, also in einer Doppelfunktion verwendet. Die Produkt-Sammeleinrichtung arbeitet dort also in beiden Phasen und jeweils von ein und derselben Seite, nämlich der Vorderseite der Regalwand her. Das erfordert besondere und aufwendige Lösungen wegen der unterschiedlichen Anforderungen an die Funktion der Sammeleinrichtung für das Kommissionieren einerseits und das Beschicken andererseits. Diese Kommissionierungsanlage ist daher relativ komplex und arbeitet vergleichsweise langsam (DE - C - 33 24 349).

Der Erfindung liegt die Aufgabe zugrunde, die bekannte, eingangs erläuterte Kommissionierungsanlage für kleinteilige, verpackte Produkte, insbesondere Apothekenprodukte, hinsichtlich des eingenommenen Raumes und hinsichtlich der Abläufe bei Beschickung und Kommissionierung zu optimieren.

Die zuvor aufgezeigte Aufgabe ist durch die Merkmale des kennzeichnenden Teils von Anspruch 1 gelöst. Nebengeordnete Ansprüche lösen die Aufgabe mit den Merkmalen des Kennzeichnungsteils von Anspruch 11 bzw. des Kennzeichnungsteils von Anspruch 13.

Erfindungsgemäß wird zunächst mit ebenen, also horizontal ausgerichteten Regalböden gearbeitet. Diese können systematisch in den geringstmöglichen Höhenabstand gebracht werden. Die Beschickungseinrichtung arbeitet gleichwohl von der Rückseite der Regalwand her und schiebt die Produkte mittels des Schiebers in die Sortierfächer hinein. Da die Sortierfächer horizontal ausgerichtet sind, bleiben die Produkte in der Position, in die sie vom Schieber bewegt worden sind, in den Sortierfächern ruhen, bis sie aus den Sortierfächern hinaus zur Zusammenstellung einer Kommission bewegt werden.

Die Kommissionierung, also das Auslagern, kann dabei durch die Produkt-Sammeleinrichtung von der Vorderseite der Regalwand her geschehen, beispielsweise mittels eines Saugmechanismus oder eines Festfriermechanismus, eventuell auch mittels eines, dann allerdings weniger platzsparenden Greifmechanismus. Von besonderem Vorteil ist aber die Ausgestaltung nach Anspruch 2. Diese weist nämlich der Beschickungseinrichtung, nämlich deren Schieber, eine Funktion auch bei der Kommissionierung, also innerhalb der Sammeleinrichtung zu. Die Produkte werden nämlich in dieser bevorzugten Ausführung durch den ohnehin vorhandenen Schieber der Beschickungseinrichtung bedarfsweise auch wieder aus den Sortierfächern auf der gegenüberliegenden Vorderseite der Regalwand hinausgeschoben und dort von einem lediglich der Sammlung dienenden Funktionsteil der Sammeleinrichtung aufgefangen.

Bevorzugte Ausgestaltungen und Weiterbildungen der Kommissionierungsanlage sind Gegenstand der Ansprüche 3 bis 10. Bei den weiteren Ausgestaltungen kommt einerseits Anspruch 4 - Kühlschrank -, andererseits Anspruch 6 - Schieber als Energieführungskette - besondere Bedeutung zu.

Die besondere Bedeutung einer Beschickungseinrichtung mit einem von einer Energieführungskette gebildeten Schieber ist Gegenstand des nebengeordneten Anspruchs 11.

Da der Einsatz einer Energieführungskette als Schieber in einer solchen Anordnung eine noch darüber hinausgehende Bedeutung hat, ist Gegenstand eines weiteren nebengeordneten Anspruchs 13 eine allgemeine Bewegungseinrichtung mit einem solchen Schieber.

Zum Stand der Technik von Energieführungsketten darf beispielsweise auf die DE - C - 23 60 227 und die US - A - 4,590 961, verwiesen werden, aus denen sich die Besonderheiten von Energieführungsketten, insbesondere Energieführungsketten aus Kunststoff, entnehmen lassen. Generell ist eine Energieführungskette eine tragende Gelenkkette, die aus mit Stegen verbundenen Kettenlaschen besteht und einen in Längsrichtung durchgehenden Innenraum bildet, in dem eine Leitung o. dgl. angeordnet sein kann. Eine solche Energieführungskette ist in einer Richtung in einem durch Anschläge begrenzten Bogen führbar, in der anderen Richtung in Strecklage durch entsprechende Anschläge ausgesteift, so daß sie im wesentlichen wie ein in bestimmtem Maße tragfähiger Balken wirkt. Solche Energieführungsketten werden für die Leitungsführung von elektrischen, hydraulischen oder pneumatischen Leitungen zwischen einer Basis und einem beweglichen, motorgetriebenen Element, beispielsweise bei Industrierobotern eingesetzt.

Im folgenden wird die Erfindung anhand einer lediglich Ausführungsbeispiele darstellenden Zeichnung näher erläutert. In der Zeichnung zeigt
- Fig. 1: in einer Draufsicht schematisch eine Kommissionierungsanlage in einem Apothekenlager,
- Fig. 2: in perspektivischer Ansicht eine Kommissionierungsanlage der in Rede stehenden Art mit zwei einander gegenüberstehenden Regalwänden,
- Fig. 3: ein bevorzugtes Ausführungsbeispiel einer erfindungsgemäßen Kommissionierungsanlage, hier nur dargestellt ein Ende einer Regalwand dieser Kommissionierungsanlage, gesehen von der Beschickungsseite, der Rückseite der Regalwand her,
- Fig. 4: in Draufsicht eine Beschickungseinrichtung einer Kommissionierungsanlage gemäß der Erfindung,
- Fig. 5: die Beschickungseinrichtung aus Fig. 4 in einer Seitenansicht,
- Fig. 6: ausschnittweise einen Teil der Regalwand mit der Beschickungseinrichtung und einem von dieser soeben ausgestoßenen Produkt,
- Fig. 7: eine erfindungsgemäße Bewegungseinrichtung unter Einsatz einer Energieführungskette in einer schematischen Darstellung.

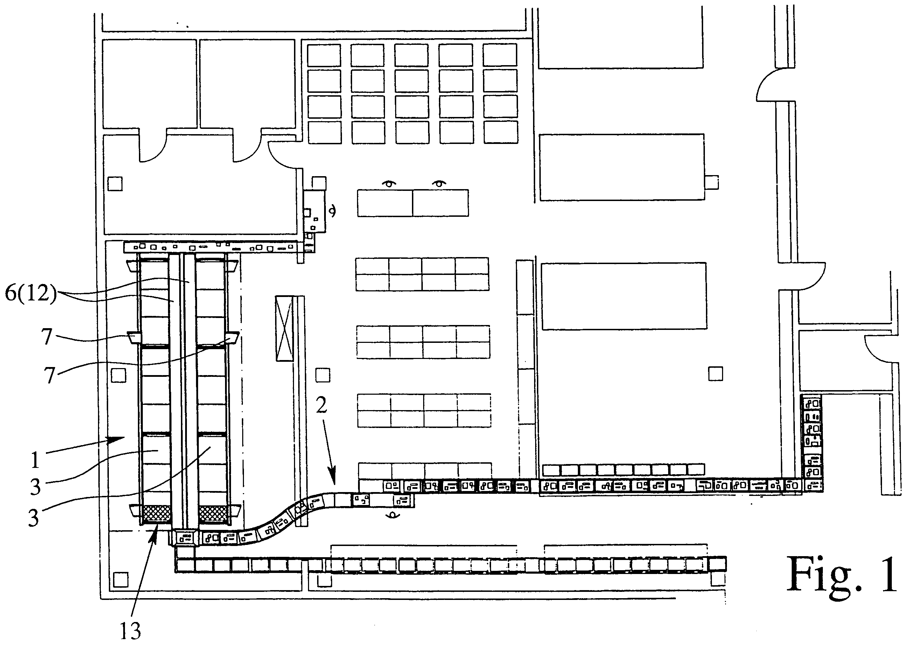

Fig. 1 zeigt schematisch in einer Draufsicht die Organisation eines Apothekenlagers, insbesondere hier eine Kommissionierungsanlage 1, von der der Strom bereits kommissionierter Produkte in Transportschalen auf der Abförderanlage 2 angedeutet ist.

Im dargestellten Ausführungsbeispiel verfügt die Kommissionierungsanlage 1 über zwei einander gegenüberstehende Regalwände 3, wobei die Lehre der Erfindung anhand einer Regalwand 3 weiter erläutert werden soll.

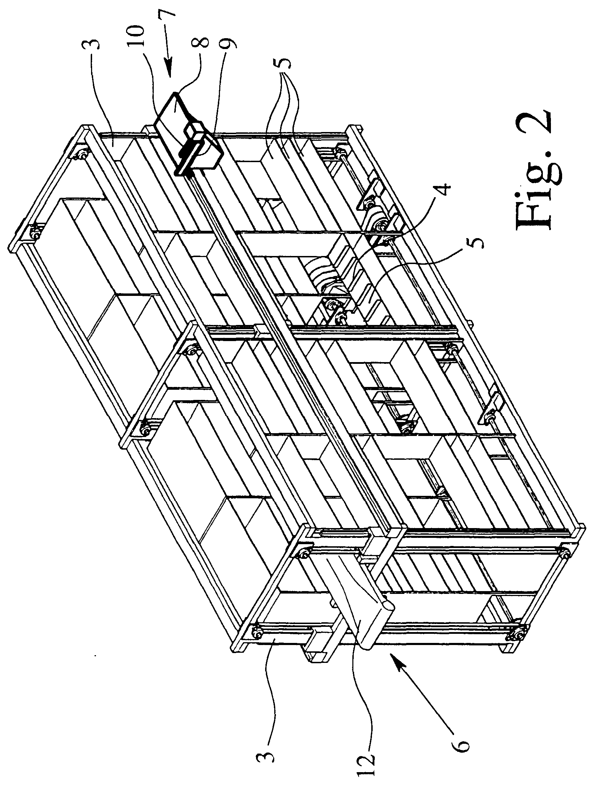

Fig. 1 in Verbindung mit Fig. 2 läßt erkennen, daß eine Regalwand 3 übereinander angeordnete, jeweils in nebeneinander liegende Sortierfächer 4 vorzugsweise beliebig einstellbarer Breite aufgeteilte Regalböden 5 aufweist, in denen die verschiedenen verpackten Produkte untergebracht sind. Diese sind hier nicht weiter dargestellt.

An der Vorderseite der Regalwand 3, in den Zeichnungen ist das der Raum zwischen den beiden Regalwänden 3, ist eine Produkt-Sammeleinrichtung 6 angeordnet. Im in Fig. 1 dargestellten Ausführungsbeispiel ist jeder Regalwand 3 eine eigene Produkt-Sammeleinrichtung 6 zugeordnet, im in Fig. 2 dargestellten Ausführungsbeispiel ist beiden Regalwänden 3 eine gemeinsame Produkt-Sammeleinrichtung 6 zugeordnet. Ersteres erlaubt ein separates Kommissionieren zu jeder Regalwand 3, letzteres ein Kommissionieren mit allen Produkten in beiden Regalwänden 3, evtl. mit Doppelbelegung (Redundanz).

An der Rückseite der Regalwand 3 ist in allen Fällen eine Produkt-Beschickungseinrichtung 7 angeordnet, die weiter unten genauer erläutert wird.

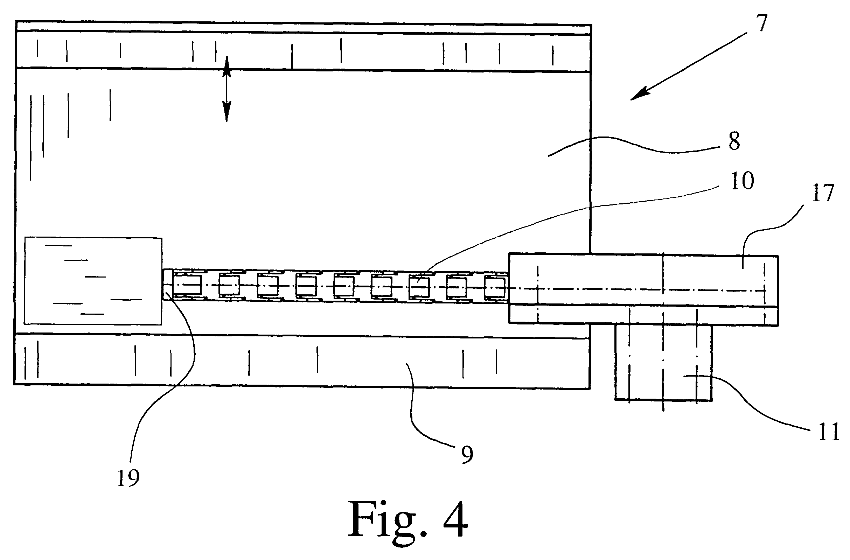

Zunächst ist wesentlich, daß die Regalböden 5 der Regalwand 3 eben angeordnet sind. Fig. 4 zeigt dabei, daß die Beschickungseinrichtung 7 eine eben ausgerichtete Beschickungsplattform 8 mit einer Ausrichtschiene 9 für die jeweiligen Produkte oder einer anderen Anordnung, mit der diese entsprechend ausgerichtet werden können, aufweist. Ferner ist die Beschickungseinrichtung 7 versehen mit einem an der Ausrichtschiene 9 o. dgl. entlang in Längsrichtung der Sortierfächer 4 bis etwa an das an der Vorderseite befindliche Ende der Sortierfächer 4 motorisch verstellbaren Schieber 10 und einem motorischen, insbesondere elektromotorischen Antrieb 11 für den Schieber 10.

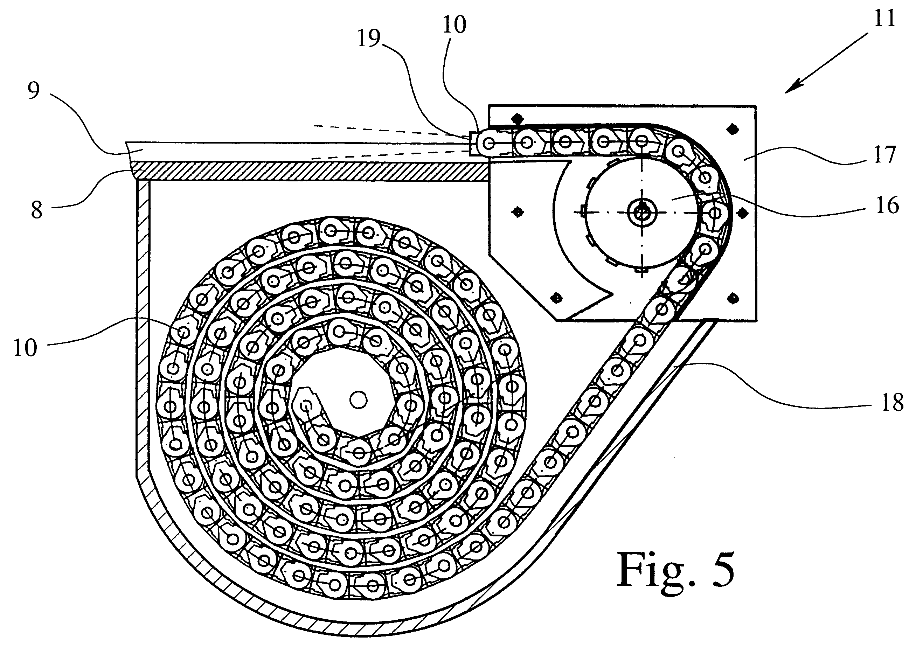

In Fig. 2 ist die Beschickungseinrichtung 7 angedeutet, die Fig. 4 bis 6 zeigen sie im Detail. Wesentlich ist, daß mittels des Schiebers 10 zunächst ein Produkt von der Beschickungsplattform 8 in das entsprechende Sortierfach 4 geschoben werden kann. Mit entsprechender Steuerungstechnik versehen kann der Schieber 10 das entsprechende Produkt exakt so weit vorschieben, daß es mit dem vorderseitigen Ende des Sortierfaches 4 fluchtet.

Nach bevorzugter Lehre ist aber weiter vorgesehen, daß die Beschickungseinrichtung 7 auch ein Funktionsteil der Sammeleinrichtung 6 ist, nämlich mittels des Schiebers 10 ein Ausstoß der Produkte aus den Sortierfächern 4 erfolgen kann. Dazu muß der Schieber 10 dann nur praktisch bis zum Ende des Sortierfachs 4 vorgeschoben werden können. Das ausgestoßene Produkt fällt dann auf die Sammeleinrichtung 6.

In den dargestellten Ausführungsbeispielen ist vorgesehen, daß die Sammeleinrichtung 6 ein vor der Regalwand 3 laufendes, in der Höhe zum jeweiligen Regalboden 5 motorisch verstellbares Förderband 12 aufweist. In Fig. 1 sind zwei Förderbänder 12 vorgesehen, in Fig. 2 ist ein einziges Förderband 12 vorgesehen, das mit beiden Beschickungseinrichtungen 7 zusammenwirkt.

Die Höhenverstellung der Sammeleinrichtung 6 kann mit der Höhenverstellung der Beschickungseinrichtung 7 gekoppelt sein, so ist das in Fig. 2 dargestellt. Die Höhenverstellungen können aber auch unabhängig voneinander sein. Im letztgenannten Fall muß natürlich eine steuerungstechnische Kopplung beider Höhenverstellungen erfolgen.

Als Alternative zu einem Förderband 12 kann auch eine Anordnung mit Auffangbehältern in der Produkt-Sammeleinrichtung 6 dienen.

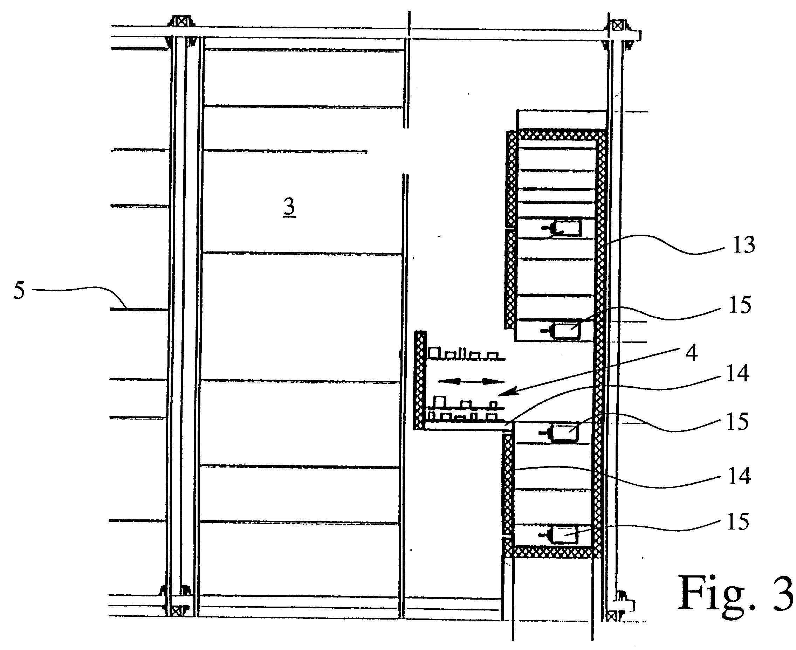

Manche Produkte, insbesondere Apothekenprodukte, bedürfen einer besonders kühlen Lagerung. Dazu zeigt Fig. 3 ein besonders bevorzugtes Ausführungsbeispiel, das dadurch gekennzeichnet ist, daß mit der Regalwand 3 fluchtend oder in die Regalwand 3 integriert ein geschlossener Kühlschrank 13 zur Kühllagerung entsprechender Produkte vorgesehen ist. Im dargestellten Ausführungsbeispiel ist vorgesehen, daß der Kühlschrank 13 motorisch in Längsrichtung der Regalwand 3 ausfahrbare und damit öffenbare Schubfächer 14 aufweist, die jeweils in nebeneinander liegende, in Querrichtung der Regalwand 3 verlaufende, endseitig offene Sortierfächer 4 für die Produkte aufgeteilt sind und daß der Kühlschrank 13 von der Beschickungseinrichtung 7 wie die Regalwand 3 im übrigen anfahrbar ist. Man erkennt in Fig. 3 ein aufgefahrenes Schubfach 14 mit darin liegenden Produkten. Das Schubfach 14 des Kühlschranks 13 fährt auf, sobald die Steuerung signalisiert, daß die Beschickungseinrichtung 7 ein darin befindliches Sortierfach 4 für ein bestimmtes Produkt anfahren wird. Das sollte mit einem entsprechenden zeitlichen Vorlauf geschehen, so daß die Synchroniserung ohne weiteres gelingt. Man erkennt angedeutet in Fig. 3 die elektromotorischen Antriebe 15 für die einzelnen Schubfächer 14 des Kühlschranks 13. In Fig. 1 erkennt man, daß in jede Regalwand 3 an deren der Abförderanlage 2 zugewandten Ende ein solcher Kühlschrank 13 integriert ist.

Im Grundsatz könnte auch vorgesehen werden, daß jeder Regalwand 3 mehrere Beschickungseinrichtungen 7 zugeordnet werden, die gleichzeitig in Funktion treten können, um die Geschwindigkeit der Kommissionierung und Beschickung zu erhöhen. Dann könnte beispielweise auch dem Kühlschrank 13 eine separate Beschickungseinrichtung 7 dauerhaft zugeordnet sein.

Die Fig. 4 bis 6 zeigen das bevorzugte Ausführungsbeispiel einer Beschickungseinrichtung 7. Im Grundsatz könnte der Schieber 10 der Beschickungseinrichtung 7 als pneumatische oder hydraulische Teleskopzylinder-Anordnung ausgeführt sein. In einem solchen Fall müßte die Teleskopzylinder-Anordnung auf der von der Regalwand abgewandten Seite der Beschickungsplattform 8 angeordnet sein. Die Teleskopzylinder-Anordnung müßte eine Baulänge aufweisen, die gewährleistet, daß die Teleskopstange der Teleskopzylinder-Anordnung über die Beschickungsplattform 8 hinweg in das Sortierfach 4 bis zu dessen Ende eintauchen kann. Da die Regalwand 3 bei üblichen Konstruktionen von solchen Kommissionierungsanlagen 1 eine Tiefe zwischen 25 cm und 1 m haben kann, wird die Baulänge der Beschickungseinrichtung 7 in Längsrichtung der Sortierfächer 4 ziemlich groß. Der Raumbedarf für die Regalwand 3 mit Beschickungseinrichtung 7 ist erheblich.

Ähnliche Probleme mit der Baugröße würde auch eine Schub-Zahnstange mit Zahnradantrieb als Schieber 10 zur Folge haben.

Das Ausführungsbeispiel in den Fig. 4 bis 6 macht eine insoweit sehr viel zweckmäßigere und besonders bevorzugte Ausführung der erfindungsgemäßen Kommissionierungsanlage 1 deutlich, die dadurch gekennzeichnet ist, daß der Schieber 10 von einer Energieführungskette 10 gebildet ist und daß die Energieführungskette 10 mit ihrer Bogeninnenseite auf der Beschickungsplattform 8 aufliegt. Was eine Energieführungskette 10 ist, ist im allgemeinen Teil der Beschreibung vor der Figuren-Kurzbeschreibung erläutert worden. Der dort zitierte Stand der Technik wird zur weiteren Erläuterung mit herangezogen.

Erfindungsgemäß ist erkannt worden, daß eine Energieführungskette 10 sich hervorragend als Schieber eignet, weil sie in Strecklage steif ist und Druckkräfte übertragen kann. In der anderen Richtung hingegen ist die Energieführungskette 10 im Bogen führbar und kann so beispielsweise aufgerollt werden. Sie nimmt bei einer vorgegebenen Verschiebelänge nur minimalen Platz ein, der gesamte Raumbedarf einer mit einer solchen Beschickungseinrichtung 7 versehenen Kommissionierungsanlage 1 ist wesentlich geringer als bei den zuvor diskutierten Varianten des Schiebers 10.

Besonders zweckmäßig ist es, wenn die Energieführungskette 10 aus Kunststoff ausgeführt ist. Das ist für den vorliegenden Belastungsfall im Regelfall völlig ausreichend.

Wesentlich ist, daß hier die Energieführungskette 10 anders eingesetzt wird als bisher Energieführungsketten eingesetzt worden sind. Sie hat nämlich nicht die Aufgabe, eine Leitung verschleißschonend zwischen zwei Elementen zu führen, sondern wird atypisch eingesetzt als auf Druck und Zug beanspruchbares Kraftübertragungselement, das aber aufrollbar ist.

Das in den Fig. 4 bis 6 dargestellte Ausführungsbeispiel zeigt, daß der Antrieb 11 der Beschickungseinrichtung 7 ein mit der Energieführungskette 10 in Eingriff stehendes Antriebselement 16, im dargestellten Ausführungsbeispiel ein Antriebsnockenrad, aufweist. Die Nocken des Antriebsnockenrades, das das Antriebselement 16 bildet, greifen in die Kammern der Energieführungskette 10 ein. Vorgesehen ist dabei, daß die Energieführungskette 10 in einer Kettenführung 17 in einem Bogen von 90° bis 180° um das Antriebselement im Formschlußeingriff geführt wird und durch die Kettenführung 17 zur Beschickungsplattform 8 hin bzw. auf den Regalboden 5 vorgespannt wird. Dadurch ist eine sichere Auflage der Energieführungskette 10, die den Schieber bildet, gewährleistet.

Man erkennt im übrigen in Fig. 4, daß der elektromotorische Antrieb 11 mit einem Getriebe unterhalb der Beschickungsplattform 8 angeordnet ist.

Es ist bislang noch nichts darüber gesagt worden, wie die Energieführungskette 10 gespeichert ist, wenn sie mit ihrer Spitze nicht bis in das Sortierfach 4 eingeschoben ist. Sie könnte einfach vom Antrieb 11 frei nach unten hängen. Das würde aber im Betrieb voraussichtlich zu Schwierigkeiten und Störungen führen. Deshalb ist hier vorgesehen, daß die Beschickungseinrichtung 7 einen Aufrollspeicher 18 für die Energieführungskette 10 aufweist, der im dargestellten Ausführungsbeispiel unterhalb der Beschickungsplattform 8 angeordnet ist. Man sieht deutlich, wie wenig Platz diese Beschickungseinrichtung 7 an der Rückseite der Regalwand 3 einnimmt.

Nur angedeutet ist in der Zeichnung, daß die Energieführungskette 10 an der vorderen Stirnseite einen Näherungssensor 19 aufweist, dessen Zuleitung in der Energieführungskette 10 verläuft. Besonders bevorzugt ist es, daß der Näherungssensor 19 als Infrarot-Sensoranordnung ausgeführt ist. Letztlich ist das also eine Infrarot-Reflexlichtschranke. Alternativen sind optische Sensoren, kapazitive Sensoren, bei entsprechenden Verpackungen evtl. auch induktive berührungslose Näherungssensoren.

Der Einsatz eines Näherungssensors 19 an der Spitze der als Schieber dienenden Energieführungskette 10 hat den großen Vorteil, daß eine positive Abtastung des Produkts im Sortierfach 4 erfolgt und nicht nur eine steuerungstechnisch vorgegebene, exakte Bewegung des Schiebers 10. Mit dem Näherungssensor 19 kann die Beschickungseinrichtung 7 auch für die Erfassung der Besetzung der Kommissionierungsanlage 1 eingesetzt werden, beispielsweise bei einer Inventur. In diesem Fall würde die Beschickungseinrichtung 7 so gesteuert werden, daß die Energieführungskette 10 mittels des Näherungssensors 19 nur bis unmittelbar an das hinterste, im Sortierfach 4 befindliche Produkt fährt. Aus Größe der Verpackung, bekannter Länge des Sortierfachs 4 und aktueller Position der Spitze der Energieführungskette 10 ergibt sich dann ohne weiteres, wieviel Produkte sich hintereinander im Sortierfach 4 befinden.

Gegenstand der vorliegenden Erfindung ist auch eine Beschickungseinrichtung für eine Kommissionierungsanlage für sich, beispielsweise zur Nachrüstung an vorhandenen Kommissionierungsanlagen 1.

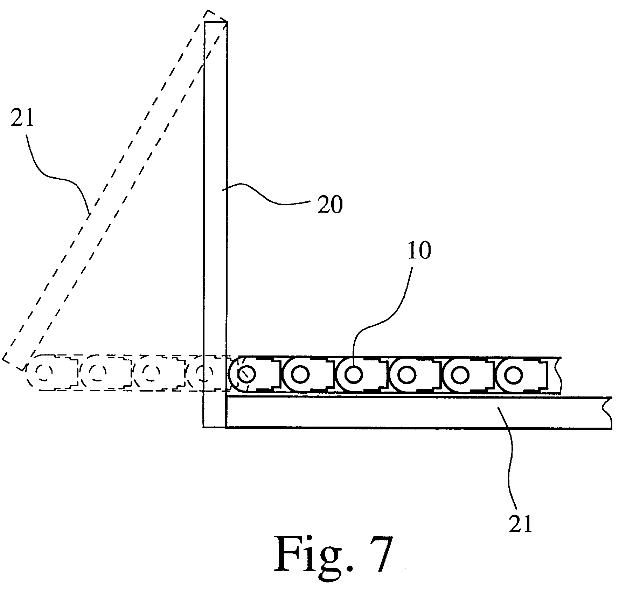

Schließlich zeigt Fig. 7 eine Anordnung, bei der die als Schieber eingesetzte Energieführungskette 10 ebenso atypisch eingesetzt ist wie zuvor erläutert, jedoch zur Bewegung eines beweglichen Teils, hier einer Klappe 20, gegenüber einer feststehenden Basis 21. Bei einer solchen Klappe kann es sich beispielsweise auch um die Schubfächer 14 des Kühlschranks 13 bzw. dessen vordere Isolierwand handeln, um einen Schieber an einer Plattform der Abförderanlage 2 etc. Wesentlich ist auch hier, daß die Energieführungskette 10 als mechanisches Kraftübertragungselement mit den zuvor erläuterten besonderen Eigenschaften genutzt wird.

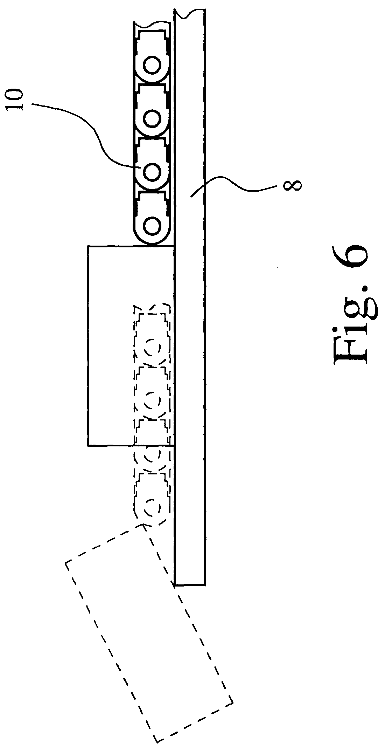

In den Fig. 4 und 6 ist die Verpackungsschachtel des jeweiligen Produkts schematisch, in Fig. 6 sowohl in durchgezogenen Linien als auch in einer anderen Lage in gestrichelten Linien, ohne Bezugszeichen dargestellt.

Ferner ist festzuhalten, daß es besonders zweckmäßig ist, wenn die ersten Glieder, insbesondere die ersten drei Glieder der den Schieber 10 bildenden Energieführungskette in Strecklage versteift sind.

## Patentansprüche

1. Kommissionierungsanlage für kleinteilige, insbesondere verpackte Produkte, insbesondere Apothekenprodukte,
mit einer Regalwand (3) mit übereinander angeordneten, jeweils in nebeneinander liegende Sortierfächer (4) aufgeteilten Regalböden (5),
mit einer an der Vorderseite der Regalwand (3) angeordneten Produkt-Sammeleinrichtung (6) und
mit einer an der Rückseite der Regalwand (3) angeordneten Produkt-Beschickungseinrichtung (7),
**dadurch gekennzeichnet,**
daß die Regalböden (5) eben angeordnet sind und
daß die Beschickungseinrichtung (7) eine eben ausgerichtete Beschickungsplattform (8) mit einer Ausrichtschiene (9) o. dgl., einen an der Ausrichtschiene (9) o. dgl. entlang in Längsrichtung der Sortierfächer (4) bis etwa an das vorderseitige Ende der Sortierfächer (4) motorisch verstellbaren Schieber (10) und einen motorischen, insbesondere elektromotorischen Antrieb (11) für den Schieber (10) aufweist.

2. Kommissionierungsanlage nach Anspruch 1, dadurch gekennzeichnet, daß die Beschickungseinrichtung (7) auch ein Funktionsteil der Sammeleinrichtung (6) ist, nämlich mittels des Schiebers (10) ein Ausstoß der Produkte aus den Sortierfächern (4) möglich ist.

3. Kommissionierungsanlage nach Anspruch 1 oder 2, dadurch gekennzeichnet, daß die Sammeleinrichtung (6) ein vor der Regalwand (3) laufendes, in der Höhe zum jeweiligen Regalboden (5) motorisch verstellbares Förderband (12) aufweist oder daß die Sammeleinrichtung (6) einen vor der Regalwand (3) in Längsrichtung und in der Höhe zum jeweiligen Regalboden (5) motorisch verstellbaren Auffangbehälter für die Produkte aufweist.

4. Kommissionierungsanlage nach einem der Ansprüche 1 bis 3, dadurch gekennzeichnet, daß mit der Regalwand (3) fluchtend oder in die Regalwand (3) integriert ein geschlossener Kühlschrank (13) zur Kühllagerung entsprechender Produkte vorgesehen ist, und, vorzugsweise, daß der Kühlschrank (13) motorisch in Längsrichtung der Regalwand (3) ausfahrbare und damit öffenbare Schubfächer (14) aufweist, die jeweils in nebeneinander liegende, in Querrichtung der Regalwand (3) verlaufende, endseitig offene Sortierfächer (4) für die Produkte aufgeteilt sind und daß der Kühlschrank (13) von der Beschickungseinrichtung (7) wie die Regalwand (3) im übrigen anfahrbar ist.

5. Kommissionierungsanlage nach einem der Ansprüche 1 bis 4, dadurch gekennzeichnet, daß der Schieber (10) als pneumatische oder hydraulische Teleskopzylinder-Anordnung ausgeführt ist oder daß der Schieber (10) als Schub-Zahnstange mit Zahnradantrieb ausgeführt ist.

6. Kommissionierungsanlage nach einem der Ansprüche 1 bis 4, dadurch gekennzeichnet, daß der Schieber (10) von einer Energieführungskette (10) gebildet ist und daß die Energieführungskette (10) mit ihrer Bogeninnenseite auf der Beschickungsplattform (8) aufliegt, vorzugsweise, daß die Energieführungskette (10) aus Kunststoff besteht.

7. Kommissionierungsanlage nach Anspruch 6, dadurch gekennzeichnet, daß der Antrieb (11) ein mit der Energieführungskette (10) in Eingriff stehendes Antriebselement (16), insbesondere ein Antriebsnockenrad aufweist und/oder daß die Energieführungskette (10) durch das Antriebselement (16) und/oder durch eine Kettenführung (17) zur Beschickungsplattform (8) bzw. zum Regalboden (5) hin vorgespannt wird.

8. Kommissionierungsanlage nach Anspruch 6 oder 7, dadurch gekennzeichnet, daß die Beschickungseinrichtung (7) einen Aufrollspeicher (18) für die Energieführungskette (10) aufweist und, vorzugsweise, daß der Aufrollspeicher (18) unterhalb der Beschickungsplattform (8) angeordnet ist.

9. Kommissionierungsanlage nach einem der Ansprüche 6 bis 8, dadurch gekennzeichnet, daß die Energieführungskette (10) an der vorderen Stirnseite einen Näherungssensor (19) aufweist, dessen Zuleitung in der Energieführungskette (10) verläuft und, vorzugsweise, daß der Näherungssensor (19) als Infrarot-Sensoranordnung ausgeführt ist.

10. Kommissionierungsanlage nach einem der Ansprüche 6 bis 9, dadurch gekennzeichnet, daß die ersten Glieder, vorzugsweise die ersten drei Glieder der den Schieber bildenden Energieführungskette (10) in Strecklage versteift sind.

11. Beschickungseinrichtung für eine Kommissionierungsanlage für kleinteilige, insbesondere verpackte Produkte, insbesondere Apothekenprodukte,
mit einer Beschickungsplattform (8),
mit einem in Längsrichtung motorisch verstellbaren Schieber (10) und
mit einem motorischen, insbesondere elektromotorischen Antrieb (11) für den Schieber (10),
wobei der Schieber (10) von einer Energieführungskette (10) gebildet ist und die Energieführungskette (10) mit ihrer Bogeninnenseite auf der Beschickungsplattform (8) aufliegt.

12. Beschickungseinrichtung nach Anspruch 11, gekennzeichnet durch die Merkmale des kennzeichnenden Teils eines oder mehrerer der Ansprüche 7 bis 10.

13. Bewegungseinrichtung zur Bewegung eines beweglichen Teils (20) gegenüber einer feststehenden Basis (21), mit einem zwischen der feststehenden Basis (21) und dem beweglichen Teil (20) angeordneten Schieber (10) und mit einem motorischen, insbesondere elektromotorischen Antrieb (11) für den Schieber (10),
**dadurch gekennzeichnet,**
daß der Schieber (10) von einer Energieführungskette (10) gebildet ist und daß die Energieführungskette (10) mit ihrer Bogenaußenseite nach oben gerichtet zwischen dem beweglichen Teil (20) und der Basis (21) verläuft und in Strecklage vorgespannt ist.

14. Bewegungseinrichtung nach Anspruch 13, gekennzeichnet durch die Merkmals des kennzeichnenden Teils eines oder mehrerer der Ansprüche 7 bis 10.
